# EUROPÄISCHE PATENTSCHRIFT

(11) **EP 4 070 691 B1**
(45) Veröffentlichungstag und Bekanntmachung des Hinweises auf die Patenterteilung: **02.08.2023**
(21) Anmeldenummer: 22158883.3
(22) Anmeldetag: 25.02.2022
(51) Int. Cl.: A47F 5/00, G09F 23/06, A47B 96/04, F16B 5/10, F16B 21/02

(54) **REGALTRENNVORRICHTUNG**
SHELF SEPARATOR
DISPOSITIF SÉPARATEUR D'ÉTAGÈRES

(30) Priorität: 08.04.2021 DE 202021101868 U
(43) Veröffentlichungstag der Anmeldung: 12.10.2022
(73) Patentinhaber: Dm-Vermögensverwaltungsgesellschaft mbH, 76227 Karlsruhe (DE)
(72) Erfinder:
(74) Vertreter: LBP Lemcke, Brommer & Partner Patentanwälte mbB

(56) Entgegenhaltungen:
- CA-C- 1 296 892
- US-A1- 2009 277 060

## Beschreibung

Die Erfindung betrifft eine Trennvorrichtung zur bereichsweisen Unterteilung eines Regals nach dem Oberbegriff des Anspruchs 1.

Im Einzelhandel werden Waren typischerweise in Regalen gelagert, an denen sich der Endverbraucher während eines Einkaufs selbst bedienen kann. Üblicherweise sind die Waren dabei nach Warengruppen geordnet. Damit der Endverbraucher bereits auf den ersten Blick und einfach erkennen kann, welche Warengruppen in einem bestimmten Bereich des Regals gelagert sind, kommen Trennvorrichtungen zum Einsatz. Eine solche Trennvorrichtung ist üblicherweise vorderseitig und in vertikaler Ausrichtung an dem Regal angeordnet, und unterteilt das Regal einfach erkennbar in zwei Bereiche.

Bekannte Trennvorrichtungen umfassen jeweils üblicherweise zwei flächige Seitenelemente, welche jeweils eine Verbindungsfläche aufweisen, an denen die Seitenelemente in einem endmontierten Zustand der Trennvorrichtung aneinander anliegen. Auf einer der Verbindungsfläche abgewandten Außenseite, kann zumindest eines der Seitenelemente bedruckt sein oder eine aufgeklebte Applikation aufweisen. Dadurch können die zu unterteilenden Bereiche des Regals durch einen Text, ein Bild oder eine bestimmte Farbgebung eindeutig gekennzeichnet sein.

Üblicherweise dienen Schraubverbindungen in einfacher Weise dazu, die zwei Seitenelemente einer Trennvorrichtung miteinander zu verbinden und dabei ein zusätzliches Befestigungselement zwischen den Seitenelementen festzuklemmen. Das Befestigungselement dient dazu, die verschraubten Seitenelemente an dem Regal anzuordnen. Beispiele für Trennvorrichtungen sind in den Dokumenten US 2009/277060 A1 und CA 1 296 892 C offengelegt.

Da das Warenangebot im Einzelhandel sich laufend verändert, ist es erwünscht, die Trennvorrichtungen in einfacher Weise und kurzer Zeit zu montieren und zu demontieren. Hierbei sind selten zusätzliche und insbesondere spezialisierte Werkzeuge verfügbar, die für die Montage bekannter Trennvorrichtungen erforderlich sind.

Der Erfindung liegt deshalb die Aufgabe zugrunde, eine Trennvorrichtung vorzuschlagen, welche in einfacherer Weise montiert und demontiert werden kann.

Die Aufgabe wird gelöst durch eine Trennvorrichtung gemäß Anspruch 1. Vorteilhafte Weiterbildungen der Trennvorrichtung finden sich in den abhängigen Unteransprüchen.

Die erfindungsgemäße Trennvorrichtung ist, wie an sich bekannt, zur bereichsweisen Unterteilung eines Regals ausgestaltet, und umfasst zwei flächige Seitenelemente sowie eine Verbindungsvorrichtung zum lösbaren Verbinden der Seitenelemente. Die Seitenelemente sind in einem endmontierten Zustand der Trennvorrichtung im Wesentlichen planparallel zueinander angeordnet. Die Verbindungsvorrichtung umfasst zwei Verbindungselemente, von denen ein Verbindungselement einem der zwei Seitenelemente zugeordnet ist und das andere Verbindungselement dem jeweils anderen Seitenelement zugeordnet ist. Ferner umfasst die Trennvorrichtung ein Befestigungselement, welches zwischen den Verbindungselementen fixierbar ist und dazu ausgestaltet ist, die Trennvorrichtung an dem Regal anzuordnen.

Wesentlich ist, dass die zwei Verbindungselemente jeweils ein Vormontagemittel umfassen, und die Vormontagemittel der zwei Verbindungselemente zueinander korrespondierend ausgestaltet sind und die Vormontagemittel der zwei Verbindungselemente durch eine erste Relativbewegung zwischen den Verbindungselementen miteinander fügbar sind, um die Trennvorrichtung in einen vormontierten Zustand zu bringen. Ferner ist wesentlich, dass die Verbindungselemente jeweils ein Rastmittel aufweisen, und die Rastmittel der zwei Verbindungselemente zueinander korrespondierend ausgestaltet sind und die Rastmittel der zwei Verbindungselemente durch eine zweite Relativbewegung zwischen den Verbindungselementen miteinander fügbar sind, um die in den vormontierten Zustand gebrachte Trennvorrichtung in einen formschlüssig endmontierten Zustand zu bringen, wobei die erste und die zweite Relativbewegung unterschiedlich sind.

In einer einfachen Ausführungsform sind die Verbindungselemente jeweils als spritzgegossene Kunststoffteile hergestellt und können jeweils stoffschlüssig, beispielsweise mittels Klebung, an jeweils einem Seitenelement befestigt sein. Vorzugsweise sind die Verbindungselemente an den einander zugewandten Verbindungsflächen der Seitenelemente angeordnet und im endmontierten Zustand der Trennvorrichtung von außen nicht sichtbar. Insbesondere weisen die Seitenelemente hierbei keine Bohrungen auf, sind also vollflächig glatt ausgestaltet.

Die Vormontagemittel sind in einer beispielhaften Ausführungsform als zwei zueinander korrespondierende Profilelemente oder etwa Feder-Nut-Elemente ausgestaltet, welche in- oder aneinander geführt werden können, um die Trennvorrichtung vorzumontieren. Der vormontierte Zustand der Trennvorrichtung zeichnet sich dadurch aus, dass die Seitenelemente und die Verbindungselemente zunächst in einer konstruktiv definierten Lage zueinander auszurichten sind, wobei die Seitenelemente und die Verbindungselemente jedoch mit geringem Kraftaufwand wieder voneinander gelöst werden können. In dem darauffolgenden Endmontageschritt dienen die Rastmittel dazu, die Seitenelemente formschlüssig miteinander zu verbinden, und dadurch die Trennvorrichtung formschlüssig zu montieren. Die Seitenelemente und die Verbindungselemente sind hierbei im Vergleich zu dem vormontierten Zustand nur durch einen erhöhten Kraftaufwand voneinander lösbar.

Vorzugsweise gelangen die Vormontagemittel der Verbindungselemente zum Abschluss der ersten Relativbewegung in einen mechanischen Kontakt miteinander, welcher auch ungeschultem Montagepersonal signalisiert, dass der Vormontageschritt beendet ist. Vorzugsweise ist die zweite Relativbewegung erst freigegeben, wenn die Trennvorrichtung in dem vormontierten Zustand vorliegt und die Rastmittel der zwei Verbindungselemente im vormontierten Zustand der Trennvorrichtung zunächst voneinander gelöst sind. Erst durch Durchführung des Endmontageschrittes mittels der zweiten Relativbewegung gelangen die Rastmittel der Verbindungselemente formschlüssig in Eingriff miteinander und schaffen eine entsprechend formschlüssige Verbindung für die Seitenelemente der Trennvorrichtung.

Die erste Relativbewegung unterscheidet sich zumindest teilweise in mindestens einer Bewegungsrichtung und/oder einer Bewegungsachse und/oder einem Bewegungsbereich von der zweiten Relativbewegung. Es ist also denkbar, dass die erste Relativbewegung entlang einer ersten Bewegungsachse verläuft, und die zweite Relativbewegung zumindest teilweise entlang einer zweiten Bewegungsachse verläuft, welche in einem Winkel ungleich 0° zu der ersten Bewegungsachse ausgerichtet ist. Ferner liegt es im Rahmen der Erfindung, dass der ersten Relativbewegung und der zweiten Relativbewegung unterschiedliche Bewegungsarten, also jeweils eine Translationsbewegung oder eine Rotationsbewegung, zugrunde liegen.

Ein Vorteil der erfindungsgemäßen Trennvorrichtung ergibt sich daraus, dass keinerlei Werkzeug benötigt wird, um die Seitenelemente miteinander zu verbinden und die Trennvorrichtung zu montieren. Aus konstruktiver Sicht ergibt sich ein weiterer Vorteil dadurch, dass die Verbindungsvorrichtung zwei funktional voneinander getrennte Fügemittel umfasst, welche jeweils zur Vormontage bzw. zur Endmontage der Trennvorrichtung dienen. Dadurch ist es möglich, die Vormontagemittel alleine hinsichtlich der konstruktiven Anforderungen für die Vormontage zu dimensionieren und die Rastmittel dementsprechend alleine hinsichtlich der konstruktiven Anforderungen für die Montage zu dimensionieren. Es liegt somit eine konstruktive Funktionstrennung vor.

Vorzugsweise weisen die Vormontagemittel einfache geometrische Formen mit hoher konstruktiver Steifigkeit auf, um hohen Fügekräften während der ersten Relativbewegung standhalten zu können. Die Rastmittel können hingegen vergleichsweise komplexe geometrische Formen mit geringen Steifigkeiten aufweisen, welche eine einfache elastische Verformung zulassen, um die Rastmittel der Verbindungselemente einfach formschlüssig miteinander fügen zu können. Während der Vormontage werden die Rastmittel geschont und die Lebensdauer der Verbindungsvorrichtung erhöht. Ferner können die Vormontagemittel mit hohen Toleranzen, also einem großen Spiel, gefügt werden, während die Rastmittel mit vergleichsweise geringen Toleranzen, also einem geringen Spiel, gefügt werden.

Bei der Vormontage der Trennvorrichtung wird das Befestigungselement zwischen den Verbindungselementen der Verbindungsvorrichtung angeordnet und nach dem anschließenden Endmontageschritt zwischen den Verbindungselementen gehalten. Das Befestigungselement dient dazu, die Trennvorrichtung in dem endmontierten Zustand an einem Regal zu befestigen.

In einer vorteilhaften Weiterbildung weist das Vormontagemittel des einen Verbindungselements einen Dorn und das Vormontagemittel des jeweils anderen Verbindungselements eine Bohrung auf, welche dazu ausgestaltet sind, bei der ersten Relativbewegung gefügt zu werden, wobei die erste Relativbewegung eine geradlinige Steckbewegung entlang einer Fügeachse umfasst, und die Fügeachse im Wesentlichen orthogonal zur Ebene der Seitenelemente ausgerichtet ist, und wobei die Rastmittel der zwei Verbindungselemente in dem vormontierten Zustand der Trennvorrichtung voneinander gelöst sind.

Der Dorn und die Bohrung sind jeweils rotationssymmetrisch und zueinander korrespondierend ausgestaltet. In einer einfachen Ausführungsform weist der Dorn eine zylindrische Grundform auf. Vorzugsweise ist der Dorn bereichsweise hohl ausgestaltet. Dadurch lassen sich Materialanhäufungen an dem Verbindungselement vermeiden, welche insbesondere bei einer Herstellung der Verbindungselemente mittels Spritzguss zu Lunkern führen können.

Die Bohrung kann als Durchgangsbohrung oder etwa als Sacklochbohrung ausgestaltet sein. In der Ausgestaltung der Bohrung als Sacklochbohrung kann der Dorn am Bohrungsgrund in mechanischen Anschlag gelangen, wodurch die erste Relativbewegung auf einfache Weise begrenzbar ist. Vorzugsweise wird die Wandung der Bohrung durch einen Wulst gebildet, welcher sich auf der Oberfläche des Verbindungselements befindet. Über die Höhe des Wulstes kann die Tiefe der Bohrung konstruktiv festgelegt werden, sodass diese im Wesentlichen unabhängig von der Dicke des Verbindungselements einstellbar ist.

In einer vorteilhaften Weiterbildung sind die zwei Verbindungselemente in dem vormontierten Zustand der Trennvorrichtung um die Fügeachse relativ zueinander verdrehbar und die zweite Relativbewegung umfasst eine relative Verdrehung der Verbindungselemente um die Fügeachse, um die Rastmittel zu verbinden und die Trennvorrichtung in den formschlüssig endmontierten Zustand zu bringen.

Der Vorteil der vorstehend beschriebenen Weiterbildung ist darin zu sehen, dass für die erste Relativbewegung und für die zweite Relativbewegung zwar unterschiedliche Bewegungsarten vorgesehen sind, um die Trennvorrichtung in den vormontierten bzw. endmontierten Zustand zu bringen, den genannten Schritten jedoch die selbe Bewegungsachse - in Gestalt der Fügeachse - zugrunde liegt. Dadurch ist es insbesondere ungeschultem Montagepersonal möglich, den Vormontageschritt und den darauffolgenden Endmontageschritt in einer flüssigen Bewegung durchzuführen, da zwischen dem Vormontageschritt und dem Endmontageschritt kein Umgreifen erforderlich ist.

Bei der relativen Verdrehung der Verbindungselemente gelangen die Rastmittel in Eingriff miteinander, wobei mindestens eines der Rastmittel vorübergehend elastisch verformt wird und in Eingriff mit dem Rastmittel des anderen Verbindungselements gelangt, z.B. in einem entsprechend profilierten Bereich. Die zweite Relativbewegung ist vorzugsweise, ebenso wie die erste Relativbewegung, durch einen mechanischen Kontakt zwischen den zwei Verbindungselementen haptisch wahrnehmbar begrenzt. Zum Lösen der Verbindung kann die zweite Relativbewegung auf einfache Weise umgekehrt werden. Gegenüber der zweiten Relativbewegung muss zum Aufheben der formschlüssigen Verbindung jedoch mindestens eines der Rastmittel unter erhöhtem Kraftaufwand verformt werden.

In einer vorteilhaften Weiterbildung ist das Befestigungselement im Wesentlichen blechförmig ausgestaltet und weist einen Durchbruch auf, mit dem das Befestigungselement in dem Bereich des Dorns oder der Bohrung des jeweiligen Verbindungselements angeordnet werden kann. In dem endmontierten Zustand ist das Befestigungselement drehbar und verschiebefest zwischen den Verbindungselementen fixiert.

Der Durchbruch des Befestigungselements kann in einer einfachen Ausführungsform als Durchgangsbohrung ausgestaltet sein. Die Durchgangsbohrung dient während der Vormontage der Trennvorrichtung als Orientierungshilfe, mittels derer das Befestigungselement an dem Dorn oder an der Bohrung des jeweiligen Verbindungselements angeordnet werden kann, bevor die Trennvorrichtung durch Fügen des Dorns in der Bohrung vormontiert wird. Durch Verbindung der Rastmittel in dem sich anschließenden Endmontageschritt ist die Anordnung des Befestigungselements in der Verbindungsvorrichtung vergleichbar mit einer Scharnierverbindung. Dabei ist das Befestigungselement drehbar gegenüber den Seitenelementen in der Verbindungsvorrichtung angeordnet. Vorzugsweise ist das Befestigungselement in einem konstruktiv festgelegten Winkelausschnitt gegenüber den Seitenelementen und der Verbindungsvorrichtung drehbar.

Vorzugsweise ist das Befestigungselement in dem endmontierten Zustand der Trennvorrichtung durch die Verbindungselemente der Verbindungsvorrichtung geklemmt und mit geringem Kraftaufwand gegenüber der Verbindungsvorrichtung und den Seitenelementen verdrehbar. Wird die Trennvorrichtung also mitels des Befestigngselements an dem Regal angeordnet, können die Seitenelemente durch eine Verdrehung gegenüber dem Befestigungselement und dem Regal geneigt werden. Durch die Klemmkraft, welche durch die Verbindungselemente auf das Befestigungselement ausgeübt wird, können die Seitenelemente in eine gewünschte Neigungslage gegenüber dem Befestigungselement und dem Regal gebracht werden, und in besagter Neigungslage verbleiben.

Ferner liegt es im Rahmen der vorteilhaften Weiterbildung, dass durch die Verbindungselemente keine oder nur eine geringe Klemmkraft auf das Befestigungselement ausgeübt wird. Nach einer erfolgten Neigung der Seitenteile können diese somit infolge von Schwerkraft wieder eigenständig in eine stabile Gleichgewichtslage gelangen.

In einer vorteilhaften Weiterbildung sind die Rastmittel der zwei Verbindungselemente zusammenwirkbar als eine Schnappverbindung ausgestaltet, wobei das Rastmittel des einen Verbindungselements einen Schnapphaken aufweist und wobei das Rastmittel des jeweils anderen Verbindungselements eine zu dem Schnapphaken korrespondierende Ausnehmung aufweist.

Durch Ausgestaltung der Rastmittel mit jeweils einem Schnapphaken oder einer zu dem Schnapphaken korrespondierenden Ausnehmung können die Rastmittel auf einfache Weise dimensioniert und gefertigt werden und erlauben gleichzeitig eine zuverlässige, formschlüssige Verbindung zwischen den Seitenelementen. Durch Einstellung der Geometrie des Schnapphakens, z.B. durch Erhöhung der Materialstärke, lässt sich ferner die Steifigkeit der Rastmittel auf einfache Weise einstellen und die Festigkeit der Verbindung zwischen den Verbindungselementen auf entsprechend einfache Weise bedarfsgemäß beeinflussen.

In einer vorteilhaften Weiterbildung weisen die Rastmittel der Verbindungselemente jeweils einen Schnapphaken und eine Ausnehmung auf, welche mit einer Ausnehmung bzw. mit einem Schnapphaken des Rastmittels des jeweils anderen Verbindungselements zusammenwirkbar sind.

Gemäß vorstehend beschriebener Weiterbildung weist das Rastmittel eines Verbindungselements gleich zwei Formschlusselemente auf, welche in korrespondierender Weise mit zwei Formschlusselementen des Rastmittels des jeweils anderen Verbindungselements verbindbar sind. Dies ist vorteilhaft, da eine einzige Fügebewegung, insbesondere eine relative Verdrehung der Seitenelemente zueinander, zu gleich zwei formschlüssigen Verbindungen führt. Dadurch wird der Formschluss redundant ausgestaltet und die Ausfallsicherheit der Verbindungsvorrichtung erhöht.

Es liegt im Rahmen der vorstehend beschriebenen vorteilhaften Weiterbildung, dass der Schnapphaken und die Ausnehmung eines Rastmittels in Bezug auf die Bewegungsrichtung der zweiten Relativbewegung neben oder hintereinander angeordnet sind.

In einer vorteilhaften Weiterbildung weisen die Verbindungselemente jeweils zwei Rastmittel auf, wobei die zwei Rastmittel eines Verbindungselements zusammenwirkbar mit den zwei Rastmitteln des jeweils anderen Verbindungselements ausgestaltet sind.

Durch die vorstehend beschriebene Weiterbildung wird die Zuverlässigkeit der formschlüssigen Verbindung zwischen den zwei Verbindungselementen weiter erhöht. Insbesondere wird die Verbindung zwischen den Seitenelementen auch dann gewährleistet, wenn ein Rastmittel eines der Verbindungselemente z.B. aufgrund von Materialermüdung bricht. Ferner weist die Verbindungsvorrichtung eine höhere Verbindungsfestigkeit auf, sodass die Seitenelemente hohen äußeren Kräften ausgesetzt werden können, ohne dass die Verbindungsvorrichtung gelöst oder beschädigt wird.

In einer vorteilhaften Weiterbildung sind die Vormontagemittel der Verbindungselemente jeweils zwischen den zwei Rastmitteln des jeweiligen Verbindungselements ausgestaltet.

Der Vorteil von vorstehend beschriebener Weiterbildung besteht darin, dass die Verbindungselemente zumindest in ihrer jeweiligen Grundform symmetrisch ausgestaltet sein können. Vorzugsweise verläuft die Fügeachse durch einen zentralen Bereich des jeweiligen Verbindungselements, in dem das jeweilige Vormontagemittel angeordnet ist und mittig zwischen den zwei Rastmitteln des jeweiligen Verbindungselements liegt. Vorzugsweise sind die Verbindungselemente im Wesentlichen punktsymmetrisch in Bezug auf die Fügeachse aufgebaut, anhand derer die Verbindungselemente durch die erste und/oder die zweite Relativbewegung miteinander verbindbar sind.

In einer vorteilhaften Weiterbildung weisen die zwei Seitenelemente jeweils eine Ausfräsung auf, in der jeweils eines der Verbindungselemente angeordnet ist.

Die obenstehend beschriebene Weiterbildung ermöglicht es, die Verbindungselemente derart an den Seitenelementen anzuordnen, dass diese im endmontierten Zustand vollflächig aneinander anliegen. Dadurch lassen sich unerwünschte Spalte zwischen den Seitenelementen vermeiden, durch welche die Seitenelemente sonst auf einfache Weise auseinandergezogen und die Verbindungselemente beschädigt werden könnten.

In einer vorteilhaften Weiterbildung weist eines der zwei Seitenelemente mindestens einen Magneten, insbesondere einen Neodymmagneten, und das jeweils andere Seitenelement ein magnetisches Element, vorzugsweise eine metallische Blechscheibe, auf. Vorzugsweise ist der Magnet sowie das magnetische Element jeweils in einer Vertiefung an jeweils einem der Seitenelemente angeordnet. Die Tiefe der Vertiefung entspricht im Wesentlichen der Höhe des Magnets bzw. des magnetischen Elements, sodass die Seitenelemente im endmontierten Zustand vollflächig aneinander anliegen. Der Magnet und das magnetische Element sind im vormontierten Zustand der Trennvorrichtung feldkraftschlüssig gelöst und im endmontierten Zustand der Trennvorrichtung feldkraftschlüssig miteinander verbunden.

Es liegt im Rahmen der vorteilhaften Weiterbildung, dass die Trennvorrichtung eine Mehrzahl an vorstehend beschriebenen Magnet-Verbindungen aufweist.

Dies ist insbesondere dann vorteilhaft, wenn die Seitenelemente der Trennvorrichtung im Vergleich zu der Verbindungsvorrichtung große Abmessungen aufweisen oder etwa Eigenspannungen aufweisen, die zu einer Verformung mindestens eines der Seitenelemente führen. Dadurch können an der Trennvorrichtung insbesondere in den Randbereichen der gefügten Seitenelemente Spalte entstehen, die durch den Feldkraftschluss zwischen den Manget-Verbindungen leicht vermeidbar sind. Darüber hinaus dienen die Magnet-Verbindungen dazu, ein unbeabsichtigtes Lösen der Verbindungsvorrichtung zu vermeiden.

Weitere bevorzugte Merkmale und Ausführungsformen werden im Folgenden anhand von Ausführungsbeispielen und den Figuren erläutert. Es zeigt
- Figur 1: eine Explosionsdarstellung einer Trennvorrichtung;
- Figur 2: ein erstes Verbindungselement der Trennvorrichtung in den Ansichten a), b), c) und d);
- Figur 3: ein zweites Verbindungselement der Trennvorrichtung in den Ansichten a), b), c) und d);
- Figur 4: ein Befestigungselement der Trennvorrichtung.

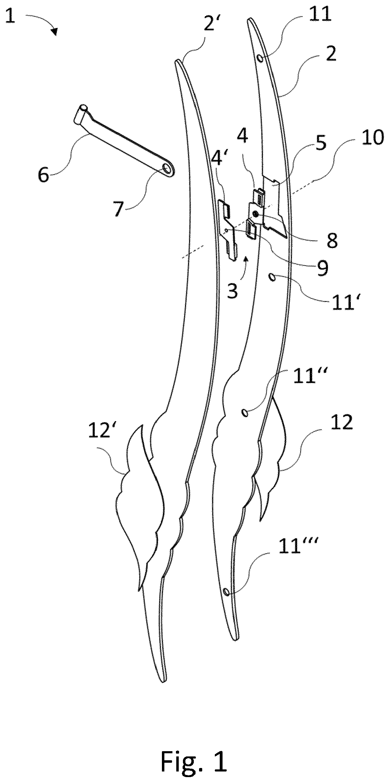

Figur 1 zeigt eine Trennvorrichtung 1 zur bereichsweisen Unterteilung eines Warenregals im Einzelhandel. Die Trennvorrichtung 1 umfasst zwei längliche Seitenelemente 2, 2`, welche mittels einer Verbindungsvorrichtung 3, die ein erstes Verbindungselement 4 und ein zweites Verbindungselement 4' umfasst, verbindbar sind.

Die Seitenelemente 2 und 2` weisen jeweils eine innenliegende Ausfräsung 5 (nur an Seitenelement 2 gezeigt) auf, die in ihrer Grundform im Wesentlichen jeweils der Grundform der Verbindungselemente 4 bzw. 4' entspricht. Ferner entspricht die Tiefe der Ausfräsung 5 der Höhe des Verbindungselements 4 bzw. 4'. Um die Seitenelemente 2 und 2` miteinander zu verbinden, werden die Verbindungselemente 4 und 4` zunächst jeweils in die Ausfräsung 5 eines der Seitenelemente 2 bzw. 2` geklebt.

Für die weitere Montage wird ein Befestigungselement 6 zwischen den zwei Verbindungselementen 4 und 4` angeordnet. Das Befestigungselement 6 dient zur Anordnung der Trennvorrichtung 1 an dem Warenregal. Das Befestigungselement 6 ist blechförmig ausgestaltet und weist einen endseitigen Durchbruch 7 in Form einer Durchgangsbohrung auf. Das Befestigungselement 6 wird mit seinem Durchbruch 7 wahlweise oberhalb und unmittelbar über einer Bohrung 8 des ersten Verbindungselements 4 oder eines Dorns 9 des zweiten Verbindungselements 4' positioniert. Anschließend werden die Verbindungselemente 4 und 4` anhand der Bohrung 8 und des Dorns 9 entlang einer gemeinsamen Fügeachse 10 zueinander ausgerichtet und durch eine lineare Steckbewegung gefügt. Dadurch wird die Trennvorrichtung 1 in einen vormontierten Zustand gebracht und das Befestigungselement 6 zwischen den Verbindungselementen 4, 4` angeordnet.

Die Verbindungselemente 4 und 4` weisen jeweils zueinander korrespondierende Rastmittel auf, welche in Figur 1 nicht mit Bezugszeichen versehen sind. Durch eine relative Verdrehung der Seitenelemente 2, 2' um die Fügeachse 10 werden die beiden Verbindungselemente 4 und 4' ebenfalls relativ zueinander verdreht, wodurch die Rastmittel der Verbindungselemente 4 und 4' in formschlüssigen Eingriff geraten. Durch diese Bewegung werden die Seitenelemente 2 und 2' ausgehend von dem vormontierten Zustand formschlüssig miteinander verbunden und die Trennvorrichtung 1 in den endmontierten Zustand gebracht. In diesem Zustand ist das Befestigungselement 6 derart an der Verbindungsvorrichtung 3 fixiert, sodass es um die Fügeachse 10 gegenüber den Verbindungselementen 4 und 4' sowie den Seitenelementen 2 und 2` gedreht werden kann. Eine lineare Verlagerung des Befestigungselements 6 gegenüber der Verbindungsvorrichtung 3 ist im endmontierten Zustand der Trennvorrichtung nicht möglich.

Wie in Figur 1 gezeigt ist, weisen die Seitenelemente 2 und 2' entlang ihrer Längserstreckungsachse wesentlich größere Abmessungen auf als die Verbindungselemente 4 und 4'. Da die Seitenelemente 2 und 2' herstellungsbedingte Eigenspannungen aufweisen können, können sie im endmontierten Zustand bereichsweise auseinanderklaffen. Um dies zu verhindern, ist eine Mehrzahl an Neodymmagneten 11, 11`, 11" und 11‴ an dem Seitenelement 2 angeordnet.

Diese stehen im endmontierten Zustand der Trennvorrichtung mit einer Mehrzahl an metallischen Blechelementen feldkraftschlüssig in Verbindung, welche in hier nicht gezeigter Weise auf der gegenüberliegenden Seite des Seitenelements 2' angeordnet sind. Dadurch sind die Seitenelemente 2 und 2' an vier Fügepunkten mittels Feldkraftschluss vollflächig miteinander verbunden.

Die Seitenelemente 2, 2' weisen ferner die Applikationen 12 bzw. 12' auf, welche jeweils auf den sichtbaren Außenseiten der Seitenelemente 2 und 2` aufgebracht sind und einen Hinweis dafür enthalten, welche Waren zu den beiden Seiten der Trennvorrichtung 1 in dem unterteilten Regal angeordnet sind.

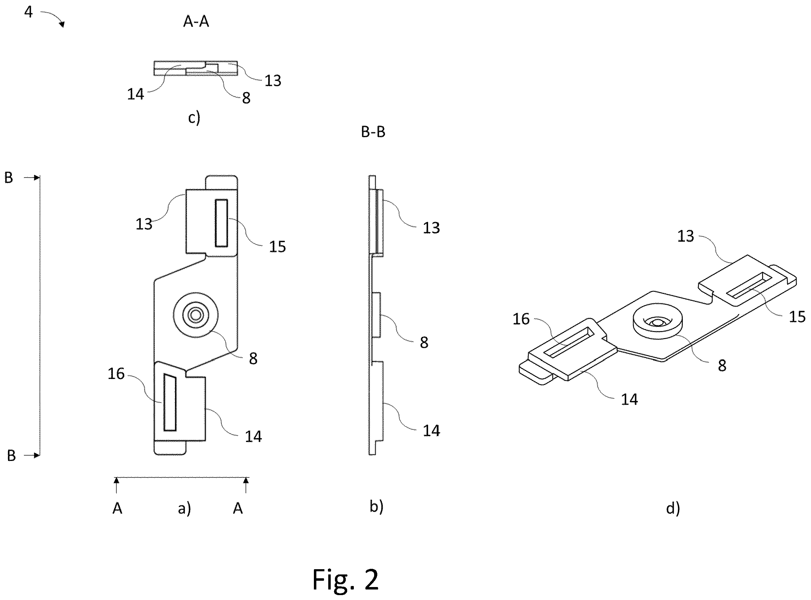

Figur 2 zeigt das erste Verbindungselement 4 in einer Draufsicht a), einer Seitenansicht b), einer Vorderansicht c) sowie einer isometrischen Ansicht d).

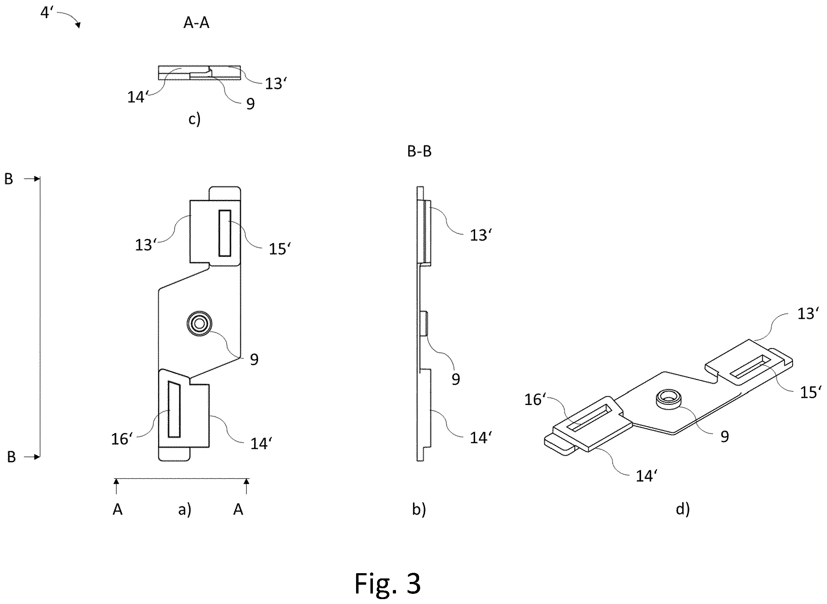

Das erste Verbindungselement 4 weist entsprechend der Beschreibung von Figur 1 eine Bohrung 8 auf. Diese befindet sich zwischen zwei Rastmitteln 13 und 14 des Verbindungselements 4. Die Rastmittel 13 und 14 ragen in Bezug auf die Draufsicht a) der Figur 2 seitlich nach links bzw. nach rechts über den Grundkörper des Verbindungselements 4 hinaus. In hier nicht gezeigter Weise umfassen die Rastmittel 13 und 14 jeweils einen Schnapphaken sowie eine Ausnehmung. Die Schnapphaken der Rastmittel 13 und 14 sind dazu ausgestaltet, mit den Ausnehmungen der Rastmittel des zweiten Verbindungselements (siehe Figur 3) in formschlüssigen Eingriff zu geraten. Die Ausnehmungen der Rastmittel 13 und 14 sind in entsprechender Weise dazu ausgestaltet, mit den Schnapphaken des zweiten Verbindungselements (siehe Figur 3) in formschlüssigen Eingriff zu geraten.

Die Rastmittel 13 und 14 weisen jeweils eine oberflächliche Aussparung 15 bzw. 16 auf. Mit dieser lassen sich Materialanhäufungen und eine damit einhergehende Lunkerbildung an dem Verbindungselement 4 bei seiner Herstellung mittels Spritzguss vermeiden. In einer anderen beispielhaften Ausführungsform dienen die Aussparungen 15 und 16 jeweils als Ausnehmungen, um mit den Schnapphaken des jeweils anderen Verbindungselements in Eingriff gebracht werden zu können.

Die Bohrung 8 ist als Sacklochbohrung mit einem Bohrungsgrund ausgestaltet und ist an der Oberfläche des Verbindungselements 4 zum Teil durch einen Wulst gebildet. Durch Ausgestaltung des Wulstes ist es möglich, das erste Verbindungselement 4 dünnwandig auszubilden, und für die Bohrung 8 dennoch eine stabile Wandung vorzusehen. Darüber hinaus lässt sich die Tiefe der Bohrung 8 unabhängig von der Dicke des Verbindungselements 4 ausbilden.

Wie in Bezug auf Figur 1 beschrieben, dient die Bohrung 8 dazu, mit einem Dorn des zweiten Verbindungselements gefügt zu werden, und dadurch die Seitenelemente vorzumontieren. Das Fügen erfolgt, indem der Dorn des zweiten Verbindungselements in die Bohrung 8 gesteckt wird. Anschließend werden die Seitenelemente 2 und 2' und damit auch die Verbindungselemente 4 und 4' zueinander verdreht. Hierdurch gelangen die Rastmittel 13, 14 des Verbindungselements 4 mit den Rastmitteln des zweiten Verbindungselements in formschlüssigen Eingriff und bilden somit eine formschlüssige Verbindung für die Seitenelemente aus.

Figur 3 zeigt das zweite Verbindungselement 4', welches analog zu Figur 2 in einer Draufsicht a), einer Seitenansicht b), einer Vorderansicht c) sowie isometrischer Ansicht d) gezeigt ist.

Das Verbindungselement 4' ist im Wesentlichen identisch zu dem Verbindungselement 3 gemäß Figur 2 aufgebaut. Im Unterschied zu dem ersten Verbindungselement 4 weist das zweite Verbindungselement 4` jedoch keine Bohrung, sondern den Dorn 9 auf, dessen Außendurchmesser geringfügig geringer ist als der Innendurchmesser der Bohrung 8 des ersten Verbindungselements 4 gemäß Figur 2. Der Dorn 9 weist einen Hohlraum auf, um Materialanhäufungen und die damit einhergehende Lunkerbildung zu vermeiden, wenn das Verbindungselement 4' mittels Spritzguss hergestellt ist.

Am oberen Rand weist der Dorn 9 eine umlaufende Fase auf, um die oben bereits erläuterte, geradlinige Fügebewegung zwischen dem Dorn 9 und der Bohrung 8 des ersten Verbindungselements 4 gemäß Figur 2 zu vereinfachen und dabei die Bohrung mit dem Dorn 9 zu zentrieren. Durch relative Verdrehung der Verbindungselemente geraten die Rastmittel 13' und 14' des zweiten Verbindungselements 4' mit den Rastmitteln des ersten Verbindungselements in formschlüssigen Eingriff. Aufgrund der symmetrischen Bauweise der Verbindungselemente ist es unerheblich, ob das Rastmittel 13' des zweiten Verbindungselements 4' mit dem Rastmittel 13 oder jedoch mit dem Rastmittel 14 des ersten Verbindungselements 4 gemäß Figur 2 verbunden wird. Ferner weisen die Rastmittel 13' und 14', analog zu den Ausführungen bezüglich des ersten Verbindungselements 4, ebenso Ausnehmungen 15' bzw. 16' auf.

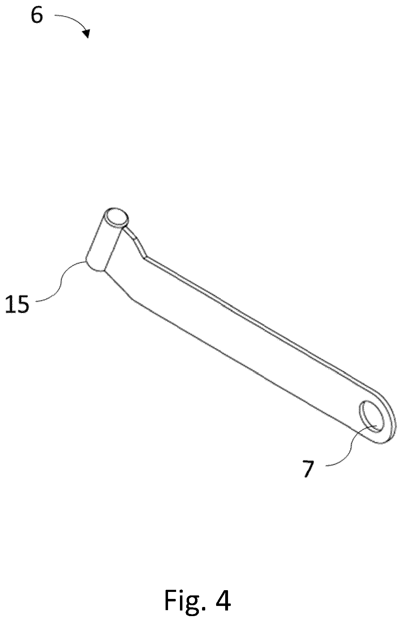

Figur 4 zeigt das Befestigungselement 6, welches, wie in Bezug zu Figur 1 beschrieben, zur Anbindung der Trennvorrichtung 1 an ein Warenregal dient. Das Befestigungselement 6 ist blechförmig ausgestaltet und weist an einem Ende eine Durchgangsöffnung 7 auf. Die Durchgangsöffnung 7 erlaubt es, das Befestigungselement 7 nach der Art eines Scharniers zwischen den Verbindungselementen 4 und 4' anzuordnen und um die Fügeachse der Bohrung und des Dorns beider Verbindungselemente verdrehbar, jedoch nicht verschieblich zu fixieren. An einem anderen Ende des Befestigungselements 6 ist eine Hülse 15 angeordnet, mit der das Befestigungselement 6 an einem Regal angeordnet werden kann. In einer anderen Ausgestaltung kann anstelle der Hülse eine beliebige andere mechanische Schnittstelle zur Anbindung der Trennvorrichtung an das Regal angeordnet sein.

## Patentansprüche

1. Trennvorrichtung (1) zur bereichsweisen Unterteilung eines Regals, umfassend zwei flächige Seitenelemente (2, 2') sowie eine Verbindungsvorrichtung (3) zum lösbaren Verbinden der Seitenelemente (2, 2'), wobei die Seitenelemente (2, 2') in einem endmontierten Zustand der Trennvorrichtung (1) im Wesentlichen planparallel zueinander angeordnet sind und die Verbindungsvorrichtung (3) zwei Verbindungselemente (4, 4') umfasst, von denen ein Verbindungselement (4) einem der zwei Seitenelemente (2) zugeordnet ist und das andere Verbindungselement (4') dem jeweils anderen Seitenelement (2') zugeordnet ist, ferner umfassend ein Befestigungselement (6), welches zwischen den Verbindungselementen fixierbar ist und dazu ausgestaltet ist, die Trennvorrichtung (1) an dem Regal anzuordnen,
**dadurch gekennzeichnet, dass**
die zwei Verbindungselemente (4, 4') jeweils ein Vormontagemittel umfassen, dass die Vormontagemittel der zwei Verbindungselemente (4, 4') zueinander korrespondierend ausgestaltet und durch eine erste Relativbewegung zwischen den Verbindungselementen (4,4') miteinander fügbar sind, um die Trennvorrichtung (1) in einen vormontierten Zustand zu bringen, und dass die Verbindungselemente (4, 4') jeweils ein Rastmittel (13, 14, 13', 14') aufweisen, dass die Rastmittel (13, 14, 13', 14') der zwei Verbindungselemente (4,4') zueinander korrespondierend ausgestaltet und durch eine zweite Relativbewegung zwischen den Verbindungselementen (4,4') miteinander fügbar sind, um die in den vormontierten Zustand gebrachte Trennvorrichtung (1) in einen formschlüssig endmontierten Zustand zu bringen, wobei die erste und die zweite Relativbewegung unterschiedlich sind.

2. Trennvorrichtung nach Anspruch 1,
**dadurch gekennzeichnet, dass**
das Vormontagemittel des einen Verbindungselements (4, 4') einen Dorn (9) und das Vormontagemittel des jeweils anderen Verbindungselements (4, 4') eine Bohrung (8) umfasst, welche dazu ausgestaltet sind, bei der ersten Relativbewegung gefügt zu werden, wobei die erste Relativbewegung eine geradlinige Steckbewegung entlang einer Fügeachse (10) umfasst, und die Fügeachse (10) im Wesentlichen orthogonal zur Ebene der Seitenelemente (2, 2') ausgerichtet ist.

3. Trennvorrichtung nach Anspruch 2,
**dadurch gekennzeichnet, dass**
die zwei Verbindungselemente (4, 4') in dem vormontierten Zustand der Trennvorrichtung (1) um die Fügeachse (10) relativ zueinander verdrehbar sind, und dass die zweite Relativbewegung eine relative Rotation der Verbindungselemente (4, 4') um die Fügeachse (10) umfasst, um die Rastmittel (13, 14, 13', 14') der zwei Verbindungselemente (4, 4') zu verbinden und die Trennvorrichtung (1) in den formschlüssig endmontierten Zustand zu bringen.

4. Trennvorrichtung nach Anspruch 2 oder 3,
**dadurch gekennzeichnet, dass**
das Befestigungselement (6) im Wesentlichen blechförmig ausgestaltet ist und einen Durchbruch (7) aufweist, und das Befestigungselement (6) mit seinem Durchbruch (7) in dem Bereich des Dorns (9) oder der Bohrung (8) des jeweiligen Verbindungselements (4, 4') anordenbar ist, und das Befestigungselement (6) in dem endmontierten Zustand der Trennvorrichtung (1) drehbar und verschiebefest zwischen den Verbindungselementen (4, 4') fixierbar ist.

5. Trennvorrichtung nach einem der voranstehenden Ansprüche,
**dadurch gekennzeichnet, dass**
die Rastmittel (13, 14, 13', 14') der zwei Verbindungselemente (4, 4') zusammenwirkbar als eine Schnappverbindung ausgestaltet sind, wobei das Rastmittel (13, 14, 13', 14') des einen Verbindungselements (4, 4') einen Schnapphaken aufweist und wobei das Rastmittel (13, 14, 13', 14') des jeweils anderen Verbindungselements (4, 4') eine zu dem Schnapphaken korrespondierende Ausnehmung aufweist.

6. Trennvorrichtung nach Anspruch 5,
**dadurch gekennzeichnet, dass**
die Rastmittel (13, 14, 13', 14') der Verbindungselemente (4, 4') jeweils einen Schnapphaken und eine Ausnehmung aufweisen, welche mit einer Ausnehmung bzw. mit einem Schnapphaken des Rastmittels (13, 14, 13', 14') des jeweils anderen Verbindungselements (4, 4') zusammenwirkbar sind.

7. Trennvorrichtung nach einem der voranstehenden Ansprüche,
**dadurch gekennzeichnet, dass**
die Verbindungselemente (4, 4') jeweils zwei Rastmittel (13, 14, 13', 14') aufweisen, wobei die zwei Rastmittel (13, 14, 13', 14') des einen Verbindungselements (4, 4') zusammenwirkbar mit den zwei Rastmitteln (13, 14, 13', 14') des jeweils anderen Verbindungselements (4, 4') ausgestaltet sind.

8. Trennvorrichtung nach Anspruch 7,
**dadurch gekennzeichnet, dass**
wobei die Vormontagemittel der Verbindungselemente jeweils zwischen den zwei Rastmitteln (13, 14, 13', 14') des jeweiligen Verbindungselements (4, 4') ausgestaltet sind.

9. Trennvorrichtung nach einem der voranstehenden Ansprüche,
**dadurch gekennzeichnet, dass**
die zwei Seitenelemente (2, 2') jeweils eine Ausfräsung (5) aufweisen, und jeweils eines der Verbindungselemente (4, 4') in der Ausfräsung (5) eines der Seitenelemente (2, 2') angeordnet ist.

10. Trennvorrichtung nach einem der voranstehenden Ansprüche,
**dadurch gekennzeichnet, dass**
eines der Seitenelemente (2, 2') mindestens einen Magneten (11, 11', 11", 11‴), insbesondere einen Neodymmagneten, umfasst und das andere Seitenelement (2, 2') ein magnetisches Element, vorzugsweise eine metallische Blechscheibe, umfasst, wobei der Magnet (11, 11', 11", 11‴) und das magnetische Element im vormontierten Zustand der Trennvorrichtung (1) feldkraftschlüssig gelöst sind und im endmontierten Zustand der Trennvorrichtung (1) feldkraftschlüssig verbunden sind.

## Claims

1. Separating device (1) for dividing a shelf into sections, comprising two flat side elements (2, 2') and a connecting device (3) for releasably connecting the side elements (2, 2'), wherein the side elements (2, 2') are arranged substantially planeparallel to one another when the separating device (1) is in a final assembled state and the connecting device (3) comprises two connecting elements (4, 4'), of which one connecting element (4) is assigned to one of the two side elements (2) and the other connecting element (4') is assigned to the other side element (2') in each case, further comprising a fastening element (6) which can be fixed between the connecting elements and is designed to arrange the separating device (1) on the shelf,
**characterised in that**
the two connecting elements (4, 4') each comprise a pre-assembly means, **in that** the pre-assembly means of the two connecting elements (4, 4') are designed to match one another and can be joined to one another by a first relative movement between the connecting elements (4, 4') in order to bring the separating device (1) into a pre-assembled state, and **in that** the connecting elements (4, 4') each have a latching means (13, 14, 13', 14'), **in that** the latching means (13, 14, 13', 14') of the two connecting elements (4, 4') are designed to match one another and can be joined to one another by a second relative movement between the connecting elements (4, 4') in order to bring the separating device (1), which has been brought into the pre-assembled state, into a form-fitting final assembled state, wherein the first and the second relative movement are different.

2. Separating device according to claim 1,
**characterised in that**
the pre-assembly means of one connecting element (4, 4') comprises a mandrel (9) and the pre-assembly means of the other connecting element (4, 4') comprises a bore (8), which are designed to be joined during the first relative movement, wherein the first relative movement comprises a straight-line insertion movement along a joining axis (10), and the joining axis (10) is oriented substantially orthogonally to the plane of the side elements (2, 2').

3. Separating device according to claim 2,
**characterised in that**
the two connecting elements (4, 4') can be rotated relative to one another about the joining axis (10) when the separating device (1) is in the pre-assembled state, and **in that** the second relative movement comprises a relative rotation of the connecting elements (4, 4') about the joining axis (10) in order to connect the latching means (13, 14, 13', 14') of the two connecting elements (4, 4') and to bring the separating device (1) into the form-fitting final assembled state.

4. Separating device according to claim 2 or 3,
**characterised in that**
the fastening element (6) is substantially in the form of sheet metal and has an opening (7), and the fastening element (6) can be arranged with its opening (7) in the region of the mandrel (9) or the bore (8) of the respective connecting element (4, 4'), and the fastening element (6), when the separating device (1) is in the final assembled state, can be fixed rotatably and non-displaceably between the connecting elements (4, 4').

5. Separating device according to any one of the preceding claims,
**characterised in that**
the latching means (13, 14, 13', 14') of the two connecting elements (4, 4') are designed to cooperate as a snap connection, wherein the latching means (13, 14, 13', 14') of one connecting element (4, 4') has a snap hook and wherein the latching means (13, 14, 13', 14') of the other connecting element (4, 4') has a recess corresponding to the snap hook.

6. Separating device according to claim 5,
**characterised in that**
the latching means (13, 14, 13', 14') of the connecting elements (4, 4') each have a snap hook and a recess which can cooperate with a recess or with a snap hook of the latching means (13, 14, 13', 14') of the other connecting element (4, 4').

7. Separating device according to any one of the preceding claims,
**characterised in that**
the connecting elements (4, 4') each have two latching means (13, 14, 13', 14'), wherein the two latching means (13, 14, 13', 14') of one connecting element (4, 4') are designed to be cooperable with the two latching means (13, 14, 13', 14') of the other connecting element (4, 4').

8. Separating device according to claim 7,
**characterised in that**
wherein the pre-assembly means of the connecting elements are each formed between the two latching means (13, 14, 13', 14') of the respective connecting element (4, 4').

9. Separating device according to any one of the preceding claims,
**characterised in that**
the two side elements (2, 2') each have a milled-out portion (5), and one of the connecting elements (4, 4') is arranged in the milled-out portion (5) of one of the side elements (2, 2').

10. Separating device according to any one of the preceding claims,
**characterised in that**
one of the side elements (2, 2') comprises at least one magnet (11, 11', 11", 11‴), in particular a neodymium magnet, and the other side element (2, 2') comprises a magnetic element, preferably a metallic sheet, wherein the magnet (11, 11', 11", 11‴) and the magnetic element, when the separating device (1) is in the pre-assembled state, are released in a field-force-locking manner, and when the separating device (1) is in the final assembled state, are connected in a field-force-locking manner.

## Revendications

1. Dispositif de séparation (1) pour la séparation par endroits d'une étagère, comprenant deux éléments latéraux (2, 2') plans ainsi qu'un dispositif de liaison (3) pour la liaison amovible des éléments latéraux (2, 2'), dans lequel les éléments latéraux (2, 2') sont agencés dans un état monté du dispositif de séparation (1) sensiblement parallèlement au plan l'un par rapport à l'autre et le dispositif de liaison (3) comporte deux éléments de liaison (4, 4'), dont un élément de liaison (4) est associé à l'un des deux éléments latéraux (2) et l'autre élément de liaison (4') est associé à l'autre élément latéral (2') respectivement, comprenant de plus un élément de fixation (6) qui peut être fixé entre les éléments de liaison et est configuré afin d'agencer le dispositif de séparation (1) au niveau de l'étagère,
**caractérisé en ce que**
les deux éléments de liaison (4, 4') comportent respectivement un moyen de prémontage, que les moyens de prémontage des deux éléments de liaison (4, 4') sont configurés de manière correspondante l'un à l'autre et sont joignables par un premier mouvement relatif entre les éléments de liaison (4, 4') entre eux afin d'amener le dispositif de séparation (1) dans un état prémonté, et que les éléments de liaison (4, 4') présentent respectivement un moyen d'encliquetage (13, 14, 13', 14'), que les moyens d'encliquetage (13, 14, 13', 14') des deux éléments de liaison (4, 4') sont configurés de manière correspondante l'un à l'autre et sont joignables par un second mouvement relatif entre les éléments de liaison (4, 4') entre eux afin d'amener le dispositif de séparation (1) amené dans l'état prémonté dans un état monté par complémentarité de formes, dans lequel le premier et le second mouvement relatif sont différents.

2. Dispositif de séparation selon la revendication 1,
**caractérisé en ce que**
le moyen de prémontage d'un élément de liaison (4, 4') comporte une épine (9) et le moyen de prémontage de l'autre élément de liaison (4, 4') respectivement comporte un perçage (8), lesquels sont configurés afin d'être joints lors du premier mouvement relatif, dans lequel le premier mouvement relatif comporte un mouvement d'enfichage en ligne droite le long d'un axe de jonction (10), et l'axe de jonction (10) est orienté sensiblement orthogonalement au plan des éléments latéraux (2, 2').

3. Dispositif de séparation selon la revendication 2,
**caractérisé en ce que**
les deux éléments de liaison (4, 4') sont rotatifs dans l'état prémonté du dispositif de séparation (1) autour de l'axe de jonction (10) l'un par rapport à l'autre, et que le second mouvement relatif comporte une rotation relative des éléments de liaison (4, 4') autour de l'axe de jonction (10) afin de relier les moyens d'encliquetage (13, 14, 13', 14') des deux éléments de liaison (4, 4') et d'amener le dispositif de séparation (1) dans l'état monté par complémentarité de formes.

4. Dispositif de séparation selon la revendication 2 ou 3,
**caractérisé en ce que**
l'élément de fixation (6) est configuré sensiblement en forme de tôle et présente une interruption (7), et l'élément de fixation (6) peut être agencé avec son interruption (7) dans la zone de l'épine (9) ou du perçage (8) de l'élément de liaison (4, 4') respectif, et l'élément de fixation (6) peut être fixé dans l'état monté du dispositif de séparation (1) de manière rotative et résistante au coulissement entre les éléments de liaison (4, 4').

5. Dispositif de séparation selon l'une quelconque des revendications précédentes,
**caractérisé en ce que**
les moyens d'encliquetage (13, 14, 13', 14') des deux éléments de liaison (4, 4') sont configurés de manière à pouvoir coopérer comme une liaison par enclenchement, dans lequel le moyen d'encliquetage (13, 14, 13', 14') d'un élément de liaison (4, 4') présente un crochet d'enclenchement et dans lequel le moyen d'encliquetage (13, 14, 13', 14') de l'autre élément de liaison (4, 4') respectivement présente un évidement correspondant au crochet d'enclenchement.

6. Dispositif de séparation selon la revendication 5,
**caractérisé en ce que**
les moyens d'encliquetage (13, 14, 13', 14') des éléments de liaison (4, 4') présentent respectivement un crochet d'enclenchement et un évidement qui peuvent coopérer avec un évidement ou avec un crochet d'enclenchement du moyen d'encliquetage (13, 14, 13', 14') de l'autre élément de liaison (4, 4') respectivement.

7. Dispositif de séparation selon l'une quelconque des revendications précédentes,
**caractérisé en ce que**
les éléments de liaison (4, 4') présentent respectivement deux moyens d'encliquetage (13, 14, 13', 14'), dans lequel les deux moyens d'encliquetage (13, 14, 13', 14') d'un élément de liaison (4, 4') sont configurés de manière à pouvoir coopérer avec les deux moyens d'encliquetage (13, 14, 13', 14') de l'autre élément de liaison (4, 4') respectivement.

8. Dispositif de séparation selon la revendication 7,
**caractérisé en ce que**
dans lequel les moyens de prémontage des éléments de liaison sont configurés respectivement entre les deux moyens d'encliquetage (13, 14, 13', 14') de l'élément de liaison (4, 4') respectif.

9. Dispositif de séparation selon l'une quelconque des revendications précédentes,
**caractérisé en ce que**
les seconds éléments latéraux (2, 2') présentent respectivement un fraisage (5), et respectivement un des éléments de liaison (4, 4') est agencé dans le fraisage (5) d'un des éléments latéraux (2, 2').

10. Dispositif de séparation selon l'une quelconque des revendications précédentes,
**caractérisé en ce que**
un des éléments latéraux (2, 2') comporte au moins un aimant (11, 11', 11", 11‴) en particulier un aimant en néodyme et l'autre élément latéral (2, 2') comporte un élément magnétique, de préférence un disque de tôle métallique, dans lequel l'aimant (11, 11', 11", 11‴) et l'élément magnétique sont détachés par la force de champ dans l'état prémonté du dispositif de séparation (1) et sont reliés dans l'état monté du dispositif de séparation (1) par la force de champ.
